Europäisches Patentamt

European Patent Office

Office européen des brevets

(19)

(11) Numéro de publication: **0 094 294**
**B1**

(12) **FASCICULE DE BREVET EUROPÉEN**

(45) Date de publication du fascicule du brevet:
23.07.86

(51) Int. Cl.⁴: **G 21 C 13/00**

(21) Numéro de dépôt: 83400870.8

(22) Date de dépôt: 29.04.83

(54) Dispositif de supportage de chaudière nucléaire.

(30) Priorité: 06.05.82 FR 8207864

(43) Date de publication de la demande:
16.11.83 Bulletin 83/46

(45) Mention de la délivrance du brevet:
23.07.86 Bulletin 86/30

(84) Etats contractants désignés:
DE GB IT NL

(56) Documents cité:
EP-A-0 012 042
DE-A-2 326 907
DE-A-2 850 651
FR-A-2 434 461
LU-A-78 145
US-A-3 583 429
US-A-4 008 757

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Aubert, Gilles, 9, Avenue des Chênes, F-91400 Orsay (FR)**

(74) Mandataire: **Mongrédien, André, c/o BREVATOME 25, rue de Ponthieu, F-75008 Paris (FR)**

## Description

La présente invention concerne un dispositif de supportage de chaudière nucléaire par rapport au bâtiment réacteur. Elle se rapporte plus particulièrement à une chaudière nucléaire de réacteur à eau sous pression. Dans un réacteur de ce type, la chaudière est constituée par une cuve fermée à parois épaisses qui contient le coeur du réacteur et au moins un générateur de vapeur disposé à l'extérieur de la cuve, dans lequel se fait la production de vapeur. La cuve est reliée au générateur de vapeur par des canalisations. Une pompe de circulation assure la circulation de l'eau de refroidissement.

Un bloc chaudière de ce type est supporté par rapport au bâtiment dans lequel il se trouve.

Plus précisément, l'invention concerne un dispositif de supportage du bloc chadière d'un réacteur nucléaire par rapport au bâtiment réacteur, ledit bloc chaudière se composant d'une cuve, de deux ou trois générateurs de vapeur, ces générateurs étant disposés autour de la cuve, chaque générateur étant relié à la cuve par des canalisations de liaison courtes et rigides permettant la circulation d'un fluide caloporteur, ledit bloc chaudière comportant en outre des pompes de circulation pour assurer la circulation du fluide caloporteur, le bloc chaudière étant supporté, par rapport au bâtiment réacteur, sur des appuis rigides.

Selon une solution classique, dite "réacteur à boucle', décrite par exemple dans le DE - A-2 326 907, la cuve, les générateurs de vapeur et les pompes primaires sont reliés entre eux par des tuyauteries longues et souples. Ainsi, chacun des composants du bloc réacteur, c'est-à-dire la cuve, les générateurs et les pompes, peut être supporté de façon indépendante par des supports qui lui sont propres.

Selon une autre solution connue, décrite dans le document EP - A1 - 0 012 042, les générateurs de vapeur sont reliés à la cuve par des liaisons relativement courtes et rigides. Le bloc chaudière est supporté, d'une part, par les appuis propres de la cuve, et d'autre part, par au moins un appui situé sur chaque générateur de vapeur. Comme dans le cas précédent, la cuve est supportée par ses appuis propres, mais elle participe partiellement au supportage des générateurs de vapeur par l'intermédiaire des canalisations qui la relient à ceux-ci.

Cependant, ces dispositifs de supportage présentent un certain nombre d'inconvénients.

Dans le cas de la première solution connue, le bloc chaudière présente un encombrement et un poids importants; d'autre part, il n'est pas possible de limiter la section de fuite en cas de rupture d'une canalisation.

Dans le cas de la deuxième solution connue, le nombre des appuis du bloc chaudière est supérieur à trois. Le supportage est donc hyperstatique et les défauts de coplanéité des joints d'appui doivent être compensés par la déformation des liaisons entre la cuve et le générateur de vapeur. Ces liaisons doivent donc avoir une souplesse, c'est-à-dire une longueur suffisante, pour qu'il n'en résulte pas de contraintes inacceptables. Ceci conduit donc à un encombrement qui est relativement important, bien que moins important que dans le premier cas. D'autre part, il est nécessaire d'installer un système complémentaire interne ou externe aux liaisons de la cuve aux générateurs de vapeur afin de limiter la section de fuite en cas de rupture d'une canalisation.

La présente invention concerne précisément un dispositif de supportage qui remédie à ces inconvénients de l'art antérieur. Elle décrit un dispositif de supportage dans lequel le nombre des appuis du bloc chaudière est égal à deux ou trois, de façon à obtenir un supportage isostatique. Ainsi, les défauts de précision dans la réalisation des appuis n'introduisent pas d'efforts supplémentaires dans le bloc chaudière, et en particulier dans les liaisons entre la cuve et le générateur de vapeur. Par suite, ces liaisons peuvent être courtes et rigides, ce qui conduit à une diminution de l'encombrement de l'ensemble.

Plus précisément, le dispositif de supportage de l'invention pour un bloc chaudière de réacteur nucléaire, ledit bloc chaudière se composant d'une cuve, de deux ou trois générateurs de vapeur disposés autour de la cuve, se caractérisé en ce que le nombre des appuis du bloc chaudière est égal à deux ou trois, un appui étant situé sous la partie inférieure de chacun des générateurs de vapeur.

Selon une autre caractéristique, le bâtiment réacteur comporte des butées latérales disposées à proximité de la paroi de chaque générateur de vapeur et diamétralement opposées à la canalisation de liaison reliant le générateur à la cuve, de façon qu'en cas de rupture d'une desdites canalisations, chacun des générateurs de vapeur ne puisse effectuer qu'un mouvement très limité.

Ainsi, en cas de rupture transversale d'une liaison cuve-générateur de vapeur, la valeur de la section de fuite du circuit primaire entre les lèvres des parties rompues est réduite sans qu'il soit nécessaire de prévoir un dispositif interne ou externe aux liaisons pour remplir la même fonction de sécurité.

D'autres caractéristiques et avantages de l'invention apparaîtront encore à la lecture de la description qui suit d'exemples de réalisation donnés à titre indicatif et nullement limitatif, en référence aux dessins annexés, sur lesquels:

- la figure 1 représente une vue en coupe, d'un ensemble bloc chaudière supporté par un dispositif de supportage conforme à l'invention;

- la figure 2 représente une vue, à échelle agrandie, d'une partie du bloc chaudière de la figure 1 montrant le détail d'un appui disposé sous un générateur de vapeur;

- les figures 3 à 5 représentent schématiquement différentes variantes de réalisation d'un dispositif de supportage conforme à l'invention.

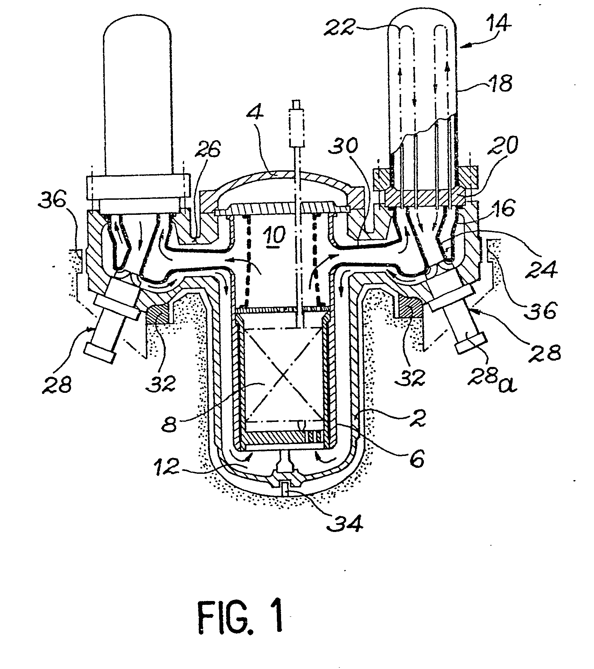

On a représenté sur la figure 1 une vue coupe d'un bloc de chaudiére nucléaire à eau sous pression comportant un dispositif de supportage conforme à l'invention. Ce bloc de chaudière se compose d'une part d'une cuve 2 et de deux générateurs de vapeur 14.

La cuve 2, à parois épaisses, est fermée à sa partie supérieure par un couvercle 4 démontable. A l'intérieur de la cuve, on trouve un panier 6 portant le coeur 8 du réacteur. Le panier 6 sépare la cuve en une zone interne chaude 10 et une zone externe froide 12. L'eau de refroidissement pénètre à la base du coeur et se réchauffe en le traversant.

De part et d'autre de la cuve, on trouve deux générateurs de vapeur 14 diamétralement opposés par rapport à la cuve. Dans l'exemple de réalisation représenté, chaque générateur 14 comporte une partie primaire en partie basse, dite boîte à eau 16, et une partie secondaire 18 où se fait la production de vapeur. La partie primaire 16 et la partie secondaire 18 sont séparées par une plaque épaisse 20 dite plaque à tubes qui porte les tubes 22 d'échange thermique dont les extrémites debouchent sur deux zones concentriques de la plaque à tubes. La zone froide et la zone chaude de la boîte à eau 24 sont séparées par une structure interne 24.

Les générateurs de vapeur 14, sont reliés à la cuve par des canalisations courtes 26 qui permettent le passage de l'eau de refroidissement qui est entraînée par des pompes de circulation 28. Dans l'exemple de réalisation représenté, les pompes de circulation sont disposées sous les générateurs de vapeur.

A l'intérieur des canalisations de liaison 26, on trouve un conduit 30 qui sépare le fluide chaud qui se dirige vers le générateur de vapeur après son passage dans le coeur du fluide froid qui retourne vers l'entrée du coeur. Ce conduit 30 est également appelé conduit chaud.

Conformément à l'invention, des appuis 32 sont disposés sous chaque générateur de vapeur. La cuve 2 ne comporte aucun point d'appui. Elle est supportée par l'intermédiaire des canalisations courtes et rigides 26.

L'exemple de réalisation représenté sur la figure 1 comporte deux générateurs de vapeur seulement, et par suite deux points d'appui sous ces générateurs. Etant donné que les générateurs 14 sont diamétralement opposés, il est nécessaire de prévoir des moyens pour empêcher le basculement du bloc chaudière. Ces moyens peuvent être constitués, comme représenté, par un clavetage 34 situé à la partie inférieure de la cuve 2. Le clavetage 34 interdit la rotation du bloc chaudière autour de ses appuis 32.

Selon une autre caractéristique de l'invention, on a disposé des butées 36 à proximité du générateur de vapeur. Les butées 36 sont situées à la periphérie du bloc chaudière, à l'opposé des canalisations de liaison 26. Elles ont pur but de minimiser la valeur de la fuite maximale sur le circuit primaire en cas de rupture d'une canalisation 26. En effet, la seule rupture imaginable sur des liaisons aussi courtes est une rupture transversale, c'est-à-dire du type à guillotine. Les butées 36 permettent la limitation des mouvements de la cuve 2 et des générateurs de vapeur 14. On limite aussi la section de fuite sans qu'il soit nécessaire de recourir à un système de sécurité complémentaire interne ou externe aux liaisons 26.

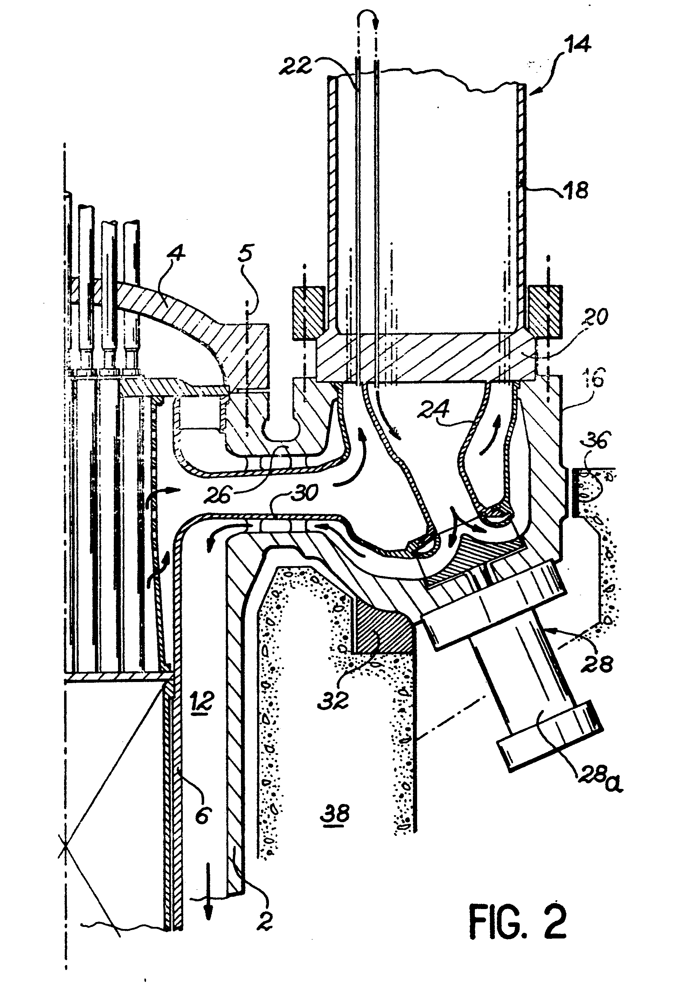

On a représenté sur la figure 2 une vue à échelle agrandie d'une partie du bloc chaudière de la figure 1 qui montre le détail d'un appui 32. On reconnaît sur cette figure la cuve 2 fermée par le couvercle 4, le panier 6 délimitant une zone chaude et une zone froide 12. On reconnaît également le générateur de vapeur 14 avec la boîte à eau 16 constituée par une pièce massive. A l'intérieur de la boîte 16 on retrouve la structure interne 24 et dans la canalisation de liaison 26, on retrouve le conduit chaud 30. Le sens de circulation de l'eau a été indiqué par des flèches. La circulation de cette eau est assurée par la pompe de circulation 28 qui est fixée à la boîte à eau 16. Lorsque, comme c'est le cas de l'exemple de réalisation représenté sur les figures 1 et 2, les pompes de circulation 28 sont implantées sous les boîtes à eau des générateurs de vapeur, il est nécessaire de les incliner légerement par rapport à la verticale, de façon à ce que le moteur des pompes puisse être disposé à l'extérieur de la paroi épaisse de protection biologique réalisée en béton ou en acier et disposée autour de la cuve 2.

Selon une variante de réalisation, les pompes de circulation peuvent être implantées directement sur la cuve 2. Dans ce cas, le problème d'interférence entre les pompes de circulation et la paroi de protection biologique 38 n'existe pas.

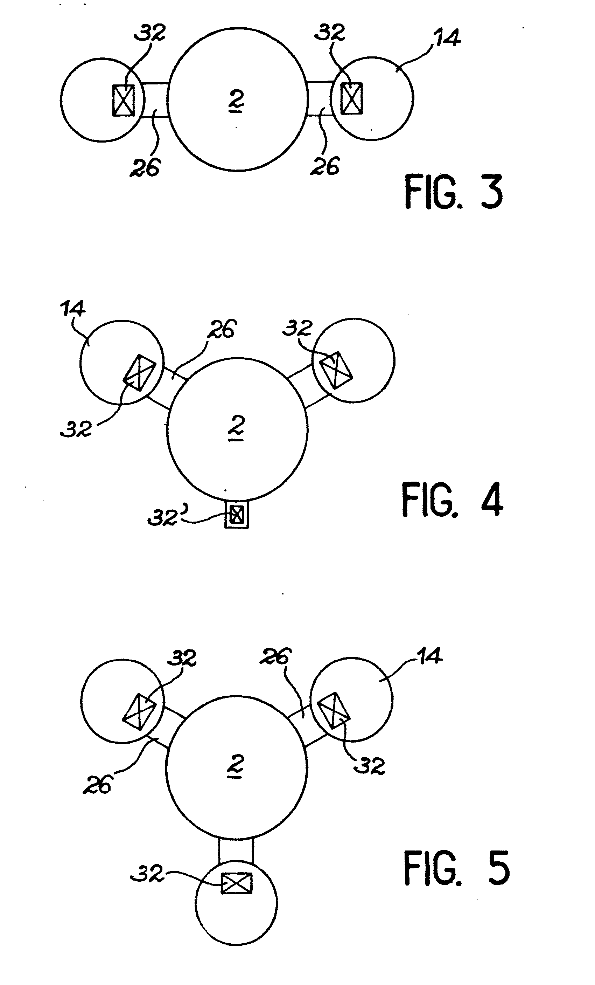

On a représenté sur les figures 3 à 5 trois variantes de réalisation possibles de l'invention.

La variante représentée sur la figure 3 correspond au mode de réalisation décrit en référence aux figures 1 et 2. Le bloc chaudière comporte deux générateurs de vapeur 14 diamétralement opposés par rapport à la cuve 2. Un appui 32 est disposé sous chaque générateur l4; la cuve 2 ne comporte pas d'appui. Elle est supportée entièrement par l'intermédiaire des liaisons courtes et rigides qui doivent donc être suffisamment robustes pour assurer cette fonction. Etant donné qu'il n'y a que deux générateurs de vapeur, et par conséquent deux points d'appui 32 seulement, il est nécessaire de prévoir des moyens pour empêcher le basculement du bloc chaudière. Ces moyens peuvent être constitués, comme cela a été dit dans la description de la figure 1, par un clavetage situé à la partie basse de la cuve 2.

On a représenté sur la figure 4 un deuxième mode de réalisation de l'invention. Ce mode de réalisation, comme le précédent, comporte seulement deux générateurs de vapeur. Toutefois, ces générateurs ne sont pas alignés. Il est donc nécessaire de prévoir un troisième point d'appui implanté directement sur cuve 2, au même niveau que les points d'appui 32. Le bloc chaudière est ainsi supporté de manière isostatique sans introduire d'efforts supplémentaires dans les liaisons entre la cuve et les générateurs de vapeur. Les liaisons 26 participent seulement partiellement au supportage de la cuve.

Selon le mode de réalisation de la figure 5, le bloc chaudière comporte trois générateurs de vapeur. Chaque générateur de vapeur repose sur un point d'appui 32. Il n'est pas nécessaire de prévoir un point d'appui supplémentaire tel que le point 32' du mode de réalisation de la figure 4 ni de clavetage comme dans le mode de réalisation de la figure 3. Le supportage ici aussi est assuré de manière isostatique sans efforts supplémentaires dans les trois liaisons 26 entre la cuve et les trois générateurs de vapeur 14.

Il est à remarquer que le nombre de générateurs de vapeur ne peut être supérieur à trois, puisque chacun d'eux comporte un appui 32 et que le nombre des appuis ne peut dépasser trois pour que le supportage reste isostatique.

**Revendications**

1. Dispositif de supportage du bloc chaudière d'un réacteur nucléaire par rapport au bâtiment réacteur, ledit bloc chaudière se composant d'une cuve (2), de deux ou trois générateurs de vapeur (14), ces générateurs étant disposés autour de la cuve (2), chaque générateur (14) étant relié à la cuve (2) par des canalisations de liaison (26) courtes et rigides permettant la circulation d'un fluide caloporteur, ledit bloc chaudière comportant en outre des pompes de circulation (28) pour assurer la circulation du fluide caloporteur, le bloc chaudière étant supporté par rapport au bâtiment réacteur sur des appuis rigides, le supportage de la cuve (2) étant assuré, au moins partiellement, par l'intermédiaire des canalisations (26) qui relie ladite cuve à chacun des générateurs de vapeur (14), caractérisé en ce que le nombre des appuis (32) du bloc chaudière est égal à deux ou trois, un appui (32) étant situé sous la partie inférieure de chacun des générateurs de vapeur (14).

2. Dispositif selon la revendication 1, caractérisé en ce que le bâtiment réacteur comporte des butées latérales (36) disposées à proximité de la paroi de chaque générateur de vapeur (14) et diamétralement opposées à la canalisation de liaison (26) reliant le générateur à la cuve, de façon qu'en cas de rupture d'une desdites canalisations (26), chacun des générateurs de vapeur ne puisse effectuer qu'un mouvement très limité.

3. Dispositif selon la revendication 1, caractérisé en ce que le bloc chaudière comporte deux générateurs de vapeur (14) diamétralement opposés par rapport à la cuve (2), des moyens étant en outre prévus pour interdire la rotation du bloc chaudière autour de ses appuis (32).

4. Dispositif selon la revendication 3, caractérisé en ce que les moyens pour interdire la rotation du bloc chaudière sont constitués par un clavetage (34) disposé à la partie basse de la cuve (2), entre cette cuve et le bâtiment réacteur.

5. Dispositif selon la revendication 1, caractérisé en ce que le bloc chaudière comporte deux générateurs de vapeur (14) non alignés, un troisième appui (32') étant implanté sur la cuve (2).

6. Dispositif selon la revendication 5, caractérisé en ce que l'appui (32') est situé au même niveau que les appuis (32).

**Patentansprüche**

1. Abstützvorrichtung für den Heizblock eines Kernreaktors gegenüber dem Reaktorgebäude, wobei sich der Heizblock aus einem Behälter (2), zwei oder drei Dampferzeugern (14) zusammensetzt, wobei diese Erzeuger um den Behälter (2) herum angeordnet sind und jeder Erzeuger (14) mit dem Behälter (2) über kurze und steife Verbindungskanäle (26) verbunden ist, die die Zirkulation eines Wärmeträgerfluids erlauben, wobei der Heizblock ferner Umlaufpumpen (28) umfaßt, um die Zirkulation des Wärmeträgerfluids sicherzustellen, und der Heizblock in bezug auf das Reaktorgebäude von festen Stützen getragen wird, die Abstützung des Behälters (2) wenigstens teilweise durch die Kanäle (26) sichergestellt ist, die den Behälter mit jedem der Dampferzeuger (14) verbinden, dadurch gekennzeichnet, daß die Anzahl der Stützen (32) des Heizblockes gleich zwei oder drei ist, wobei sich eine Stütze (32) unter dem unteren Teil eines jeden Dampferzeugers (14) befindet.

2. Vorrichtung nach Anspruch 1, dadurch gekennzeichnet, daß das Reaktorgebäude seitliche Anschläge (36) umfaßt, die nahe der Wand eines jeden Dampferzeugers (14) und dem Verbindungskanal (26), der den Erzeuger mit dem Behälter verbindet, diametral gegenüberliegend angeordnet sind, derart, daß im Falle eines Bruches eines der Kanäle (26) jeder der Dampferzeuger nur eine sehr begrenzte Bewegung ausführen kann.

3. Vorrichtung nach Anspruch 1, dadurch gekennzeichnet, daß der Heizblock zwei in bezug auf den Behälter (2) diametral gegenüberliegende Dampferzeuger (14) aufweist, wobei ferner Mittel vorgesehen sind, um die Drehung des Heizblockes um seine Stützen herum zu unterbinden.

4. Vorrichtung nach Anspruch 3, dadurch gekennzeichnet, daß die Mittel zum Unterbinden der Drehung des Heizblockes von einer Keilverbindung (34) gebildet sind, welche am unteren Teil des Behälters (2) zwischen diesem Behälter und dem Reaktorgebäude angeordnet ist.

5. Vorrichtung nach Anspruch 1, dadurch gekennzeichnet, daß der Heizblock zwei nicht ausgerichtete Dampferzeuger (14) aufweist, wobei eine dritte Stütze (32') an dem Behälter (2) eingesetzt ist.

6. Vorrichtung nach Anspruch 5, dadurch gekennzeichnet, daß sich die Stütze (32') auf der gleichen Höhe wie die Stützen (32) befindet.

## Claims:

1. An apparatus for supporting the heating unit of a nuclear reactor with respect to the reactor building, said heating unit comprising a reactor vessel (2), two or three steam generators (14), said generators being located around the reactor vessel (2), each generator (14) being connected to the reactor vessel (2) by short, rigid, connecting ducts (26) for circulation of a heat transfer fluid, said heating unit additionally comprising circulation pumps (28) to provide circulation of the heat transfer fluid, the heating unit being supported in the reactor building by rigid bearing members, support of the reactor vessel (2) being at least partially provided through the ducts (26) connecting said reactor vessel to each of the steam generators (14), characterised in that the number of bearing members (32) of the heating unit is equal to two or three, a bearing member (32) being situated under the bottom of each of the steam generators (14).

2. Apparatus according to claim 1, characterised in that the reactor building comprises lateral abutments (36) located near the wall of each steam generator (14) and diametrically opposed to the connecting ducts (26) between the generator and the reactor vessel, whereby each of the steam generators can make only very limited movement in the case of rupture of one of the ducts (26).

3. Apparatus according to claim 1, characterised in that the heating unit comprises two steam generators (14) diametrically opposed to one another with respect to the reactor vessel (2), additional means being provided to prevent rotation of the heating unit around its bearing members (32).

4. Apparatus according to claim 3, characterised in that the means for preventing rotation of the heating unit comprise a foundation pin (34) at the bottom of the reactor vessel (2) and between said reactor vessel and the reactor building.

5. Apparatus according to claim 1, characterised in that the heating unit comprises two non-aligned steam generators (14), a third bearing member (32') being fixed to the reactor vessel (2).

6. Apparatus according to claim 5, characterised in that the bearing member (32') is located at the same level as the bearing members (32).

FIG. 1

FIG. 2

FIG. 3

FIG. 4

FIG. 5